(19) Europäisches Patentamt
European Patent Office
Office européen des brevets

(11) Veröffentlichungsnummer: **0 238 685**
**B1**

(12) # EUROPÄISCHE PATENTSCHRIFT

(45) Veröffentlichungstag der Patentschrift: **28.12.88**

(51) Int. Cl.[4]: **C 08 G 18/61**, B 29 C 33/64, C 08 L 75/04

(21) Anmeldenummer: **86104125.9**

(22) Anmeldetag: **25.03.86**

(54) **Verfahren zur Herstellung von Polyurethanformteilen.**

(43) Veröffentlichungstag der Anmeldung: **30.09.87 Patentblatt 87/40**

(45) Bekanntmachung des Hinweises auf die Patenterteilung: **28.12.88 Patentblatt 88/52**

(84) Benannte Vertragsstaaten: **FR GB IT NL SE**

(56) Entgegenhaltungen:
**EP-A- 0 083 733**
**EP-A- 0 122 743**
**EP-A- 0 133 454**
**DE-C- 3 509 810**
**US-A- 4 111 861**

(73) Patentinhaber: **Th. Goldschmidt AG, Goldschmidtstrasse 100 Postfach 101461, D-4300 Essen 1 (DE)**

(72) Erfinder: **Lammerting, Helmut, Schweerstrasse 13, D-5812 Herbede (DE)**
Erfinder: **Kollmeier, Hans-Joachim, Dr., Barkhorstrücken 27, D-4300 Essen (DE)**

**EP 0 238 685 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Polyurethanformteilen durch Umsetzung von mindestens einem Polyol mit einem organischen Di- oder Polyisocyanat in Gegenwart von Katalysatoren und Trennmitteln unter Formgebung.

Die Erfindung betrifft insbesondere ein Verfahren zur Herstellung von Polyurethanformteilen nach dem Reaction-Injection-Molding (RIM)-Verfahren.

Polyurethanformteile werden in grossem Umfang als Karosserieteile, wie Schürzen, Spoiler, Kotflügel, in der Automobilindustrie verwendet. Aufgrund ihrer Zähigkeit und Abriebfestigkeit sind die als Schuhsohlen, Absätze und für viele andere Zwecke geeignet.

Die Aushärtung der Polyurethane geschieht unter gleichzeitiger Formgebung in geschlossenen, geheizten Formen. Dabei hat insbesondere das Reaction-Injection-Molding-Verfahren, sogenanntes RIM-Verfahren, besondere Bedeutung erlangt.

Ein erhebliches Problem ergibt sich daraus, dass die geformten Polyurethanteile dazu neigen, mit der inneren Formwandung zu verkleben. Zwar sind dem mit der Herstellung von Formteilen aus reaktiven Massen vertrauten Fachmann Trennmittel in grosser Zahl bekannt. Derartige Trennmittel können auf die Innenwände der Formen aufgebracht oder als interne Trennmittel dem Reaktionsansatz zugegeben werden. Die internen Trennmittel können unterschiedlichen Substanzklassen angehören. Als interne Trennmittel werden Metallseifen, wie z. B. Zinkstearat, Ester höherer Fettsäuren, natürliche oder synthetische Öle, Wachse oder Silicone verwendet.

Dabei sind als interne Trennmittel insbesondere solche Produkte bevorzugt, die eine besondere Vorbereitung der Formen überflüssig machen, die Eigenschaften des ausreagierten, geformten Kunststoffes nicht beeinflussen und möglichst keine Änderung der Oberflächeneigenschaften der Formteile, wie etwa eine Beeinträchtigung der Lackierbarkeit, verursachen. Die internen Trennmittel sollen im Reaktionsansatz gut verteilbar sein, müssen sich aber, um trennend wirken zu können, an der Oberfläche des Formteiles anreichern.

Beispiele von internen Trennmitteln, die insbesondere bei der Herstellung von Polyurethanformteilen nach dem RIM-Verfahren eingesetzt werden sollen, sind siliciumorganische Blockmischpolymerisate, welche neben Siloxanblöcken Polyoxyalkylenblöcke aufweisen. Dabei spielt offenbar die Struktur der Verbindungen eine für das Trennverhalten wesentliche Rolle.

So ist z. B. der DE-OS 25 43 638 entnehmen, dass die Verbindungen der Formel

$$Me_3SiO(Me_2SiO)_{67}(Me\underset{\textstyle (CH_2)_3O(CH_2\underset{\textstyle CH_3}{\underset{|}{C}}HO)_{2,5}H}{\underset{|}{Si}}O)_3SiMe_3 \qquad II$$

den Verbindungen mit der Formel

$$H(OR)_xO\overset{Me}{\underset{Me}{Si}}(OSiMe_2)_yO\overset{Me}{\underset{Me}{Si}}(OR)_xOH \qquad III$$

und/oder

$$H(OR)_xO\overset{Me}{\underset{Me}{Si}}(OSiMe_2)_y-$$

$$-O\overset{Me}{\underset{Me}{Si}}(OR)_xO\overset{Me}{\underset{Me}{Si}}(OSiMe_2)_yO\overset{Me}{\underset{Me}{Si}}(OR)_x- \qquad IV$$

$$-O\overset{Me}{\underset{Me}{Si}}(OSiMe_2)_yO\overset{Me}{\underset{Me}{Si}}(OR)_xOH \qquad V$$

unterlegen sein sollen, wobei in den Formeln II bis V die Indices x jeweils einen Mittelwert von 3 bis 45 haben, der Index y jeweils für einen Mittelwert von 8 bis 198 steht, Me Methyl bedeutet und der Rest $(-OR)_x$ für ein Polyoxyalkylenpolymer oder ein Polyoxyalkylencopolymer steht, wobei R aus Ethylenresten oder Butylenresten oder Gemischen aus Ethylen- oder Butylenresten mit Propylenresten zusammengesetzt ist, wobei die Menge aus Ethylen- oder Butylenresten im Verhältnis zur Menge der Propylenreste so gewählt ist, dass das Verhältnis aus den Kohlenstoffatomen zu den Sauerstoffatomen im gesamten Block (−OR−) 2,0:1 bis 2,9:1 ausmacht.

Dieser Druckschrift können auch Testmethoden zur Emittlung und zum Vergleich der Trennfähigkeit verschiedener Trennmittel entnommen werden.

Spätere Arbeiten zeigen, dass gewisse funktionelle Gruppen die Trennfähigkeit verbessern können. Siloxane mit solchen funktionellen Gruppen sind aus der US-PS 4 076 695 bekannt. Sie enthalten als funktionelle Gruppen an Kohlenwasserstoffgruppen Carboxylgruppen, die ihrerseits mittels einer Si−C− oder SiOC-Bindung mit dem Siloxangerüst verbunden sind. Diese Trennmittel mit Carboxylgruppen bilden jedoch keine stabilen Mischungen mit den Polyolen, die Amin- und gegebenenfalls Sn-Katalysatoren enthalten. Durch den Zusatz dieser Verbindungen wird ausserdem die Gelzeit des Polyurethansystems verlängert.

Eine Verwendung dieser Verbindungen als Bestandteil der Isocyanatkomponente ist aufgrund ihrer Reaktivität nicht möglich.

Diese Nachteile wurden zwar bei Verwendung der in der US-PS 4 472 341 beschriebenen siliciumorganischen Verbindungen als interne Trennmittel weitgehend überwunden. Diese Siloxane

haben Einheiten $-\underset{R^1COR^2}{\underset{|}{SiO}}-$,
wobei R eine niedere Alkyl- oder Arylgruppe ist. $R^1$ ist ein zweiwertiger Kohlenwasserstoffrest, der Sauerstoff- oder Schwefelatome enthalten kann. $R^2$ ist eine niedrige Alkoxy-, eine Aroxygruppe oder die Gruppe $R^3O(CHR^4CH_2O-)_x$, wobei $R^3$ ein Wasserstoffrest oder eine niedere Alkylgruppe, $R^4$ ein Wasserstoff- oder Methylrest und x einen Wert von 1 bis 50 hat. Jedoch kann ihr Trennverhalten noch nicht völlig befriedigen. Gleiches gilt für Siloxane mit organisch gebundenen $CONR_2$-Gruppen, wobei R Wasserstoffreste bedeutet.

Der Erfindung liegt deshalb die Aufgabe zugrunde, interne Trennmittel zur Herstellung von Polyurethanformteilen, insbesondere nach dem RIM-Verfahren, zu finden, die die eingangs gezeigten Anforderungen möglichst optimal erfüllen.

Überraschenderweise gelingt dies erfindungsgemäss dadurch, dass man als internes Trennmittel Verbindungen der allgemeinen durchschnittlichen Formel

$$R^1_2R^2SiO-\left[\begin{matrix}R^1\\|\\SiO-\\|\\R^1\end{matrix}\right]_x\left[\begin{matrix}R^1\\|\\SiO-\\|\\R^2\end{matrix}\right]_y SiR^2R^1_2 \qquad I$$

wobei

$R^1$ im Molekül gleich oder verschieden ist und einen Alkylrest mit 1 bis 18 Kohlenstoffatomen oder einen Arylrest bedeutet, mindestens 70% der Reste $R^1$ aber Methylreste sind,

$R^2$ gleich $R^1$ ist oder einen der Reste

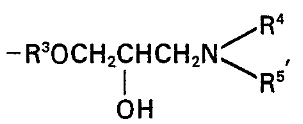

$-R^3OCH_2\underset{OH}{\underset{|}{C}}HCH_2(OC_2H_4)_zOR^6$ oder

$-R^3O(C_2H_4O)_n(C_3H_6O)_mR^7$ bedeutet, in denen

$R^3$ ein zweiwertiger Kohlenwasserstoffrest mit 2 bis 4 Kohlenstoffatomen ist,

$R^4$, $R^5$ einwertige Kohlenwasserstoffreste oder gemeinsam Bestandteil eines Morpholin- oder Piperazinringes sind,

$R^6$ ein niederer Alkylrest mit 1 bis 4 Kohlenstoffatomen und

$R^7$ ein Wasserstoff-, Acyl- oder der $R^6$-Rest ist,

z = 1 bis 10,

n = 1 bis 20 und

m = 1 bis 20 ist,

mit der Massgabe, dass im durchschnittlichen Molekül mindestens ein

Rest $R^2$ die Bedeutung 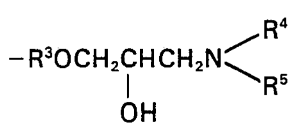

hat,

x = 20 bis 300 und

y = 1 bis 20 ist,

in Mengen von 0,5 bis 10 Gew.-%, bezogen auf Gesamtgewicht des Reaktionsansatzes, verwendet.

Der Rest $R^1$ ist an Silicium gebunden und vorzugsweise ein niederer Alkylrest mit 1 bis 4 Kohlenstoffatomen, besonders bevorzugt der Methylrest. Die Bedeutung des Restes $R^1$ kann im durchschnittlichen Molekül unterschiedlich sein, jedoch muss die Bedingung erfüllt sein, dass mindestens 70% der Reste $R^1$ Methylreste sind. Die übrigen 30% der Reste $R^1$ können Ethyl-, Propyl- oder Butylreste sein. Es können jedoch auch Alkylreste mit bis zu 18 Kohlenstoffatomen an Silicium gebunden sein. Sie sind jedoch in der Regel nur in geringem Anteil bis zu 10% der Reste $R^1$ enthalten.

Mindestens ein Rest $R^2$ muss im mittleren Molekül die Bedeutung des Restes

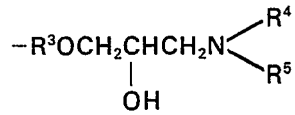

haben. Der verbrückende zweiwertige Kohlenwasserstoff ist vorzugsweise der $-CH_2CH_2CH_2$-Rest. Die am Stickstoff gebundenen Reste $R^4$, $R^5$ sind vorzugsweise Alkylreste mit 1 bis 10 Kohlenstoffatomen, wie Methyl-, Ethyl-, Propyl-, Isobutyl-, Cyclohexyl- oder Decylreste. Die Reste $R^4$, $R^5$ können auch Alkyloxyalkylreste, z. B. $-CH_2CH_2OCH_3$-Reste, sein. An die Stelle zweier Reste kann ein cyclischer Rest treten: Dabei sind die Reste $R^4$, $R^5$ gemeinsam Bestandteil eines Morpholin- oder Piperazinringes, z. B.

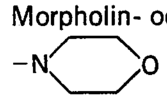 oder 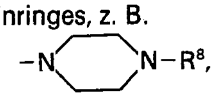

wobei $R^8$ ein Alkylrest oder ein Alkyloxyalkylrest mit bis zu 10 Kohlenstoffatomen, vorzugsweise ein Methylrest, ist. Bevorzugte Reste $R^2$ haben die Bedeutung

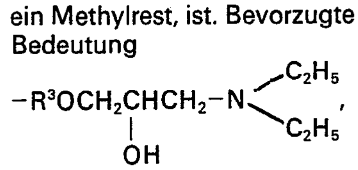

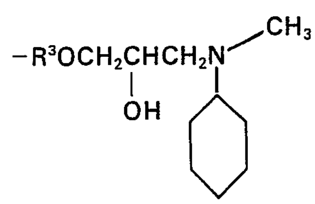

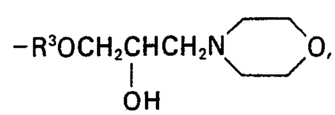

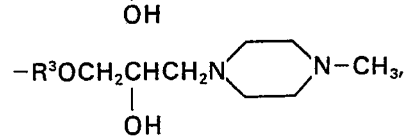

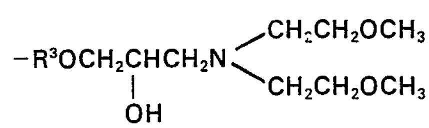

Der Rest $R^2$ kann ausserdem, wenn die Bedingung erfüllt ist, dass mindestens ein Rest $R^2$ der Rest 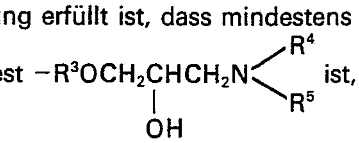 ist, die Bedeutung des Restes 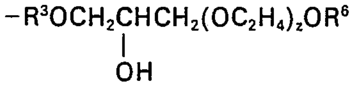 oder $-R^3O(C_2H_4O)_n(C_3H_6O)_mR^7$ haben. Dabei ist $R^6$ ein niederer Alkylrest, vorzugsweise der Methylrest. $R^7$ ist ein Wasserstoff-, ein Acylrest oder der Rest $R^6$, vorzugsweise der Methyl-, Ethyl-, Propyl- oder Butylrest. z hat einen Wert von 1 bis 10, n und m einen Wert von jeweils 1 bis 20. Diese Reste $R^4$ tragen zur Verträglichkeit der siliciumorganischen Verbindungen mit dem Verschäumungspolyol bei.

Die Indices x und y kennzeichnen die Anzahl der difunktionellen Siliciumeinheit. Vorzugsweise ist x gleich 60 bis 200 und y gleich 3 bis 10.

Es besteht Grund zu der Vermutung, dass die hohe Wirksamkeit der beim erfindungsgemässen Verfahren zu verwendenden Trennmittel in der Anwesenheit eines tertiären Stickstoffatoms in den Verbindungen der Formel I zu suchen ist. Hierdurch wird möglicherweise die Aushärtung der Polyurethanformteile im Oberflächenbereich zusätzlich katalysiert.

Ausser diesen speziellen siliciumorganischen Verbindungen können beim erfindungsgemässen Verfahren auch an sich bekannte Trenn- oder Zusatzmittel mit eingesetzt werden. Dies sind insbesondere Metallsalze von Fettsäuren mit mehr als 8 Kohlenstoffatomen, vorzugsweise die Calciumsalz der Stearin- und Palmitinsäure, ferner Ester von Fettsäuren mit drei- oder mehrwertigen Alkoholen, wie z. B. Glycerintristearat, Pentaerythrittetraoleat oder Sorbitanlaurat. Diese Hilfstrennmittel werden zweckmässig in Mengen von 1 bis 5 Gew.-%, bezogen auf Gesamtgewicht des Reaktionsansatzes, zugegeben.

Die Herstellung der beim erfindungsgemässen Verfahren zu verwendenden Verbindungen gelingt in an sich bekannter Weise durch Addition von Verbindungen, die statt der Gruppe $R^3$ eine olefinisch ungesättigte Gruppe tragen, an Siloxane mit SiH-Gruppen, z. B. entsprechend der Reaktion:

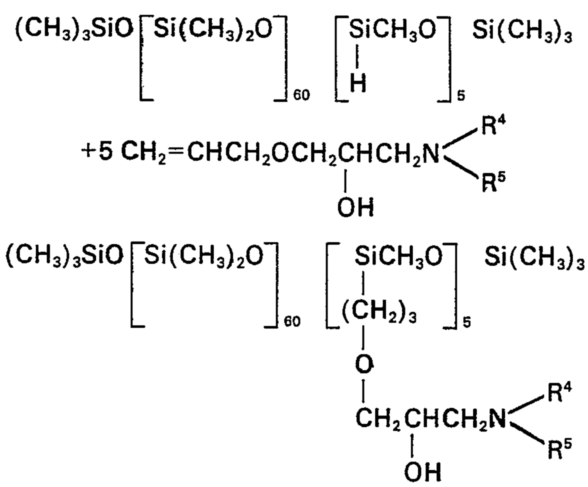

In ähnlicher Weise reagieren die Verbindungen

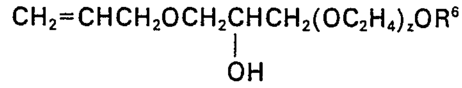 und

$$CH_2{=}CHCH_2O(C_2H_4O)_n(C_3H_6O)_mR^7$$

zur Einführung der zusätzlich genannten Reste $R^2$. Die Reaktion wird durch Zusatz von Platinverbindungen katalysiert.

Eine bevorzugte Reaktionsdurchführung besteht darin, dass zunächst ein SiH-funktionelles Polysiloxan gemäss obiger Formel mit Allylglycidether gegebenenfalls in Mischung mit $CH_2{=}CH{-}CH_2{-}O(C_2H_4O)_n(C_3H_6O)_mR^7$ in Gegenwart von Platinverbindungen, wie z. B. $H_2PtCl_6 \cdot 6H_2O$, umgesetzt wird und danach die eingeführten Epoxidreste mit Verbindungen der allgemeinen Formel 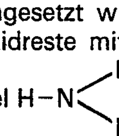 oder $HO(C_2H_4O)_zOR^6$ in an sich bekannter Weise umgesetzt werden.

Weitere Syntheseangaben können der DE-PS 32 15 317, Angaben zur Katalyse der DE-PS 31 33 869 entnommen werden.

Bei dem erfindungsgemässen Verfahren sollen die ausgewählten siliciumorganischen Verbindungen in Mengen von 0,5 bis 10 Gew.-%, bezogen auf Gesamtgewicht des Ansatzes, enthalten sein. Bevorzugt sind Mengen von 1 bis 5 Gew.-%, insbesondere 1 bis 3 Gew.-%.

In den folgenden Beispielen wird die gegenüber Produkten des Standes der Technik verbesserte Trennkraft der beim erfindungsgemässen Verfahren zu verwendenden Verbindungen näher gezeigt.

Hierzu wird eine typische RIM-Formulierung mit einem Handmischgerät zubereitet. Man gibt das Gemisch in eine Testform und lässt es dort reagieren. Bei jeweils sonst identischen Versuchen werden interne Trennmittel des Standes der Technik und beim erfindungsgemässen Verfahren zu verwendende Trennmittel zugesetzt. Zusätzlich wird eine Testverschäumung ohne Trennmittelzusatz durchgeführt.

Versuchsdurchführung:

100 Gew.-Teile eines Polyetherpolyols mit der OH-Zahl 27, das durch Anlagerung von Propylenoxid an Trimethylolpropan und anschliessendes Anlagern von Ethylenoxid hergestellt worden war, werden mit 28 Gew.-Teilen Ethylenglykol, 0,35 Gew.-Teilen Triethylendiamin, 0,02 Gew.-Teilen Dibutylzinndilaurat und 5 Gew.-Teilen des Trennmittels gemischt (Polyolkomponente).

Als Isocyanat wird ein durch Umsetzung von 4,4'-Diisocyanatodiphenylmethan mit Tripropylenglykol erhaltenes Produkt, NCO-Gehalt 23%, verwendet (Isocyanatkomponente).

Jeweils 100 Gew.-Teile der Polyolkomponente werden mit 127 Gew.-Teilen der Isocyanatkomponente durch intensives Rühren mit einem Laborrührer mit 2500 Umdrehungen in 7 Sekunden vermischt. Das noch flüssig vorliegende Reaktionsgemisch wird in eine auf 60° C temperierte verschliessbare Aluminiumform gegossen. Zum Verschliessen der Form dient ein separater Deckel, der mit Schraubzwingen befestigt wird. Die Forminnenflächen und die Innenseite des zum Verschliessen verwendeten Deckels werden vor dem Eingiessen der Reaktionsmasse mit einem wachshaltigen Trennmittel versehen. Dazu wird das Trennmittel mit einem Lappen sehr dünn aufgetragen und poliert. Nach einer Standzeit von 4 Minuten wird der Deckel der Form entfernt und die dabei notwendigen Zugkräfte mit einer Federwaage gemessen. Ohne Verwendung eines internen Trennmittels verklebt der Deckel mit dem Reaktionsgut, so dass beim gewaltsamen Entfernen des Deckels die Oberfläche des Formlings beschädigt wird und Teile des Reaktionsgutes auf der Deckelinnenseite haften. Bei Verwendung interner Trennmittel wird die Entfernung des Formdeckels wesentlich erleichtert und eine Beschädigung der Oberfläche des Formlings vermieden. Die Ergebnisse von Vergleichsversuchen sind in der folgenden Tabelle zusammengestellt. Als erfindungsgemäss zu verwendende siliciumorganische Polymerisate wurden eingesetzt:

$$(CH_3)_3SiO-\left[Si(CH_3)_2O-\right]_{75}\left[\underset{\displaystyle R^2}{\underset{|}{SiCH_3O}}-\right]_3 Si(CH_3)_3$$

$$R^2 = -(CH_2)_3OCH_2\underset{\displaystyle OH}{\underset{|}{C}}HCH_2R^*$$

Verbindung A $R^*$ = Morpholinrest
Verbindung B $R^*$ = N-Monomethylcyclohexylaminrest
Verbindung C $R^*$ = Di-(2-methoxyethyl)-aminrest
Verbindung D $R^*$ = N-Methylpiperazinrest

Als Vergleichssubstanzen wurden verwendet

Verbindung E beschrieben in US-PS 4 076 695, Beispiel 1
Verbindung F beschrieben in DE-OS 25 43 638, Seite 20 oben
Verbindung G beschrieben in US-PS 4 472 341 m = 80, q = 3, R = $CH_3$, n = 2, n' = 1, $R^2 = -OCH_3$

Die zugesetzte Menge Trennmittel betrug jeweils 1,65 Gew.-%, bezogen auf Reaktionsansatz.

*Tabelle*

| Produkt | | Trennkraft [N/100 cm²] |
|---|---|---|
| Blindversuch ohne Zusatz | | 40 |
| A | erfindungsgemäss | 11 |
| B | erfindungsgemäss | 12 |
| C | erfindungsgemäss | 12 |
| D | erfindungsgemäss | 11 |
| E | nicht erfindungsgemäss | 25 |
| F | nicht erfindungsgemäss | 22 |
| G | nicht erfindungsgemäss | 23 |

Die gemessenen Trennkraftwerte belegen die hohe Wirksamkeit der beim erfindungsgemässen Verfahren zu verwendenden Trennmittel.

## Patentansprüche

1. Verfahren zur Herstellung von Polyurethanformteilen durch Umsetzung von mindestens einem Polyol mit einem organischen Di- oder Polyisocyanat in Gegenwart von Katalysatoren und Trennmitteln unter Formgebung, dadurch gekennzeichnet, dass man als internes Trennmittel Verbindungen der allgemeinen durchschnittlichen Formel

$$R^1_2R^2SiO-\left[\underset{\displaystyle R^1}{\underset{|}{\overset{\displaystyle R^1}{\overset{|}{SiO}}}}-\right]_x\left[\underset{\displaystyle R^2}{\underset{|}{\overset{\displaystyle R^1}{\overset{|}{SiO}}}}-\right]_y SiR^2R^1_2$$

wobei

$R^1$ im Molekül gleich oder verschieden ist und einen Alkylrest mit 1 bis 18 Kohlenstoffatomen oder einen Arylrest bedeutet, mindestens 70% der Reste $R^1$ aber Methylreste sind,

$R^2$ gleich $R^1$ ist oder einen der Reste

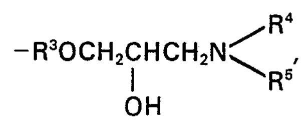

$$-R^3OCH_2\underset{\displaystyle OH}{\underset{|}{C}}HCH_2(OC_2H_4)_zOR^6 \quad \text{oder}$$

$-R^3O(C_2H_4O)_n(C_3H_6O)_mR^7$ bedeutet, in denen

$R^3$ ein zweiwertiger Kohlenwasserstoffrest mit 2 bis 4 Kohlenstoffatomen ist,

$R^4$, $R^5$ einwertige Kohlenwasserstoffreste oder gemeinsam Bestandteil eines Morpholin- oder Piperazinringes sind,

$R^6$ ein niederer Alkylrest mit 1 bis 4 Kohlenstoffatomen und

$R^7$ ein Wasserstoff-, Acyl- oder $R^6$-Rest ist,

z = 1 bis 10,

n = 1 bis 20 und

m = 1 bis 20 ist,

mit der Massgabe, dass im durchschnittlichen Molekül mindestens ein Rest $R^2$ die Bedeutung

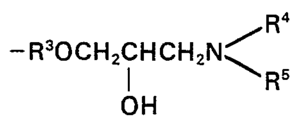 hat,

x = 20 bis 300 und

y = 1 bis 20 ist,

in Mengen von 0,5 bis 10 Gew.-%, bezogen auf Gesamtgewicht des Reaktionsansatzes, verwendet.

2. Verfahren nach Anspruch 1, dadurch gekennzeichnet, dass man Verbindungen der vorgenannten Formel verwendet, welche eine oder mehrere der bevorzugten Bedingungen

$R^1$ = Methylrest,
$R^3$ = $-CH_2CH_2-CH_2$-Rest,
$R^4$, $R^5$ = Alkylrest mit 1 bis 10 Kohlenstoffatomen, wobei die Kohlenstoffkette durch ein Sauerstoffatom unterbrochen sein kann oder gemeinsam der

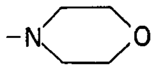 oder 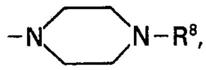

wobei $R^8$ ein

Alkylrest oder ein Alkyloxyalkylrest mit bis zu 10 Kohlenstoffatomen ist,
x = 60 bis 200,
y = 3 bis 10,
erfüllt.

3. Verfahren nach Anspruch 1 oder 2, dadurch gekennzeichnet, dass man dem Reaktionsansatz zusätzlich Metallsalze von Fettsäuren mit mehr als 8 Kohlenstoffatomen oder Ester dieser Fettsäuren mit drei oder mehrwertigen Alkoholen in Mengen von 1 bis 5%, bezogen auf Gesamtgewicht des Reaktionsansatzes, zugibt.

## Claims

1. Process for the production of polyurethane mouldings by reacting at least one polyol with an organic di- or polyisocyanate in the presence of catalists and release agents with shaping, characterized in that compounds of the general average formula

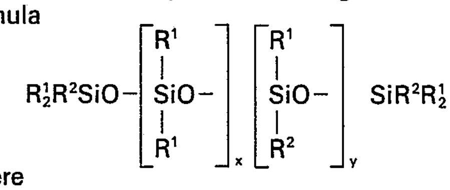

where

$R^1$ is identical or different in the molecule and denotes an alkyl radical having 1 to 18 carbon atoms or an aryl radical, but at least 70% of the $R^1$ radicals being methyl radicals,

$R^2$ is identical to $R^1$ or denotes one of the radicals

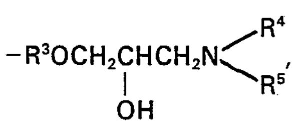

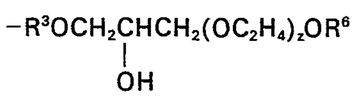 or

$-R^3O(C_2H_4O)_n(C_3H_6O)_mR^7$ in which

$R^3$ is a divalent hydrocarbon radical having 2 to 4 carbon atoms,

$R^4$ and $R^5$ are monovalent hydrocarbon radicals or together are part of a morpholine or piperazine ring,

$R^6$ is a lower alkyl radical having 1 to 4 carbon atoms and

$R^7$ is a hydrogen, acyl or $R^6$ radical,
z is 1 to 10,
n is 1 to 20 and
m is 1 to 20,

with the proviso that, in the average molecule, at least one $R^2$ radical has the meaning

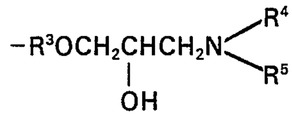

x is 20 to 300 and
y is 1 to 20,

are used in amounts from 0.5 to 10% by weight, relative to the total weight of the reaction batch, as an internal release agent.

2. Process according to Claim 1, characterized in that compounds of the above mentioned formula are used which fulfil one or more of the preferred conditions
$R^1$ = a methyl radical,
$R^3$ = a $-CH_2CH_2-CH_2$-radical,
$R^4$ and $R^5$ = an alkyl radical having 1 to 10 carbon atoms, it being possible for the carbon chain to be interrupted by an oxygen atom, or together are the

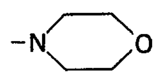 or 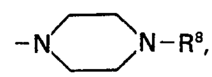

where $R^8$
is an alkyl radical or an alkoxyalkyl radical having up to 10 carbon atoms,
x = 60 to 200 and
y = 3 to 10.

3. Process according to Claim 1 or 2, characterized in that, in addition, metal salts of fatty acids having more than 8 carbon atoms or esters of these fatty acids with trihydric or polyhydric alcohols are added to the reaction batch in amounts from 1 to 5%, relative to the total weight of the reaction batch.

## Revendications

1. Procédé pour la fabrication de pièces moulées en polyuréthanne, par réaction d'au moins un polyol sur un di- ou polyisocyanate organique, en présence de catalyseurs et d'agents de démoulage lors du moulage, caractérisé en ce qu'on utilise comme agent de démoulage interne des composés ayant la formule moyenne générale suivante

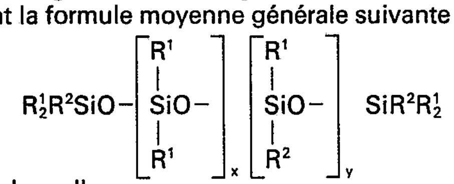

dans laquelle

les radicaux $R^1$, dans la molécule, sont identiques ou différents, et représentent chacun un radical alkyle ayant de 1 à 18 atomes de carbone ou un radical aryle, mais au moins 70% des radicaux $R^1$ étant des radicaux méthyle,

les radicaux $R^2$ sont identiques à $R^1$, ou représentent chacun l'un des radicaux

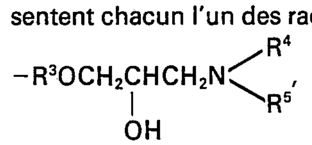

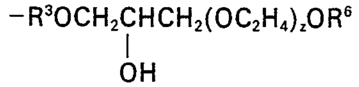

ou $-R^3O(C_2H_4O)_n(C_3H_6O)_mR^7$

où

$R^3$ est un radical hydrocarboné bivalent ayant de 2 à 4 atomes de carbone,

$R^4$ et $R^5$ représentent chacun un radical hydrocarboné monovalent, ou forment ensemble un constituant d'un noyau morpholine ou pipérazine,

$R^6$ est un radical alkyle inférieur ayant de 1 à 4 atomes de carbone, et

$R^7$ est un radical hydrogène, acyle ou $R^6$,

z vaut de 1 à 10

n vaut de 1 à 20, et

m vaut de 1 à 20,

à la condition que, dans la molécule moyenne, au moins un radical $R^2$ représente

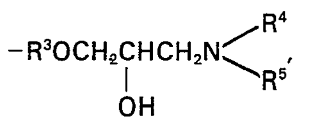

x vaut de 20 à 300, et

y vaut de 1 à 20,

en des quantités de 0,5 à 10% en poids par rapport au poids total de la masse réactionnelle.

2. Procédé selon la revendication 1, caractérisé en ce qu'on utilise des composés ayant la formule ci-dessus, laquelle satisfait à une ou plusieurs des conditions préférées suivantes:

$R^1$ est un radical méthyle,

$R^3$ est le radical $-CH_2CH_2-CH_2$,

$R^4$ et $R^5$ représentent chacun un radical alkyle ayant de 1 à 10 atomes de carbone, la chaîne hydrocarbonée pouvant être interrompue par un atome d'oxygène, ou forment ensemble

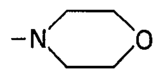 ou 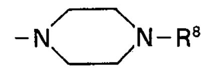

où $R^8$ est un radical alkyle ou un radical alkyloxyalkyle ayant jusqu'à 10 atomes de carbone,

x vaut de 60 à 200,

y vaut de 3 à 10.

3. Procédé selon la revendication 1 ou 2, caractérisé en ce qu'on ajoute en outre, à la masse réactionnelle, des sels métalliques d'acides gras ayant plus de 8 atomes de carbone, ou des esters de ces acides gras avec des trialcools ou polyalcools en des quantités de 1 à 5% par rapport au poids total de la masse réactionnelle.